Europäisches Patentamt

European Patent Office

Office européen des brevets

(19)

(11) Numéro de publication: **0 061 664**
**B1**

(12) # FASCICULE DE BREVET EUROPÉEN

(45) Date de publication du fascicule du brevet:
**10.07.85**

(51) Int. Cl.⁴: **H 02 B 1/04**

(21) Numéro de dépôt: **82102228.2**

(22) Date de dépôt: **18.03.82**

(54) Dispositif de fixation d'un appareil sur profilés supports.

(30) Priorité: **23.03.81 FR 8105728**

(43) Date de publication de la demande:
**06.10.82 Bulletin 82/40**

(45) Mention de la délivrance du brevet:
**10.07.85 Bulletin 85/28**

(84) Etats contractants désignés:
**DE FR GB IT**

(56) Documents cités:
**DE - A - 1 415 689**
**DE - A - 2 928 118**
**FR - A - 2 440 631**

(73) Titulaire: **CGEE ALSTHOM Société anonyme dite:,
13, rue Antonin Raynaud, F-92309 Levallois-Perret (FR)**

(72) Inventeur: **Borne, André, 22, allée des Cèdres,
F-69100 Villeurbanne (FR)**
Inventeur: **Guernet, Henri, 110, avenue Lacassagne,
F-69003 Lyon (FR)**
Inventeur: **Marmonier, André, 15, rue des Roses,
F-69500 Bron (FR)**

(74) Mandataire: **Weinmiller, Jürgen et al, Zeppelinstrasse 63,
D-8000 München 80 (DE)**

BUNDESDRUCKEREI BERLIN

## Description

L'invention concerne la fixation d'appareils et notamment d'appareils électriques sur des profilés supports, à bords parallèles sortants ou rentrants tels que par exemple les profilés EN 50 035 (profilé G) et EN 50 022 (profilé chapeau).

Il existe de nombreux dispositifs de fixation pour des appareils électriques tels que par exemple bornes de connexion, disjoncteurs, blocs de jonction, dispositifs qui comportent des crochets généralement élastiques pour permettre la pose ou la dépose de l'appareil sur le profilé support.

Ces dispositifs, qui font généralement partie de l'appareil sont situés à une extrémité ou base du boîtier de l'appareil, ce boîtier étant en matériau isolant. Les crochets sont bien évidemment en même matériau que le boîtier, le matériau devant permettre une certaine élasticité des crochets.

Un dispositif de ce type est décrit dans le document FR-A-2 440 631, dans lequel un bloc de jonction comporte à une extrémité deux crochets extrêmes élastiques et un crochet central rigide.

Afin d'éviter que la fixation du bloc de jonction ne soit compromise lorsqu'il est soumis à des efforts transversaux, il est prévu une lame de verrouillage qui comporte deux crochets en regard du pied central et de l'un des deux pieds extrêmes, ladite lame coulissant dans une encoche prévue dans l'extrémité du bloc de jonction.

Un tel dispositif de fixation présente un inconvénient qui réside dans le fait que les deux pieds de fixation élastiques peuvent casser, d'où impossibilité de fixer le bloc de jonction qui devient alors inutilisable.

Un autre inconvénient réside dans le fait que le boîtier de l'appareil doit être en matériau isolant permettant une certaine élasticité au niveau des crochets, ce qui interdit l'emploi de matériaux isolants thermodurcissables tels que par exemple, certaines résines polyesters, les mélanines phénol, ou la matière connue sous la marque »La Bakélite«.

L'invention a pour but un dispositif de fixation d'un appareil sur profilés supports dans lequel les crochets sont rigides, le boîtier étant en un matériau thermodurcissable ou non.

Ce but est atteint selon l'invention par le dispositif tel que caractérisé dans la revendication 1.

L'invention sera bien comprise par la description qui va suivre d'un exemple de réalisation illustré par les figures annexées dans lesquelles:

— La figure 1 est une vue en perspective éclatée d'un dispositif de fixation de l'invention,

— la figure 2 est une vue en élévation d'un élément du dispositif de la figure 1,

— la figure 3 est une vue de gauche de l'élément de la figure 2,

— la figure 4 est une vue de dessous selon une coupe IV-IV de l'élément de la figure 2,

— la figure 5 représente le dispositif de la figure 1 monté sur un profilé symétrique dit profilé chapeau,

— la figure 6 représente le dispositif de la figure 1 monté sur un profilé asymétrique.

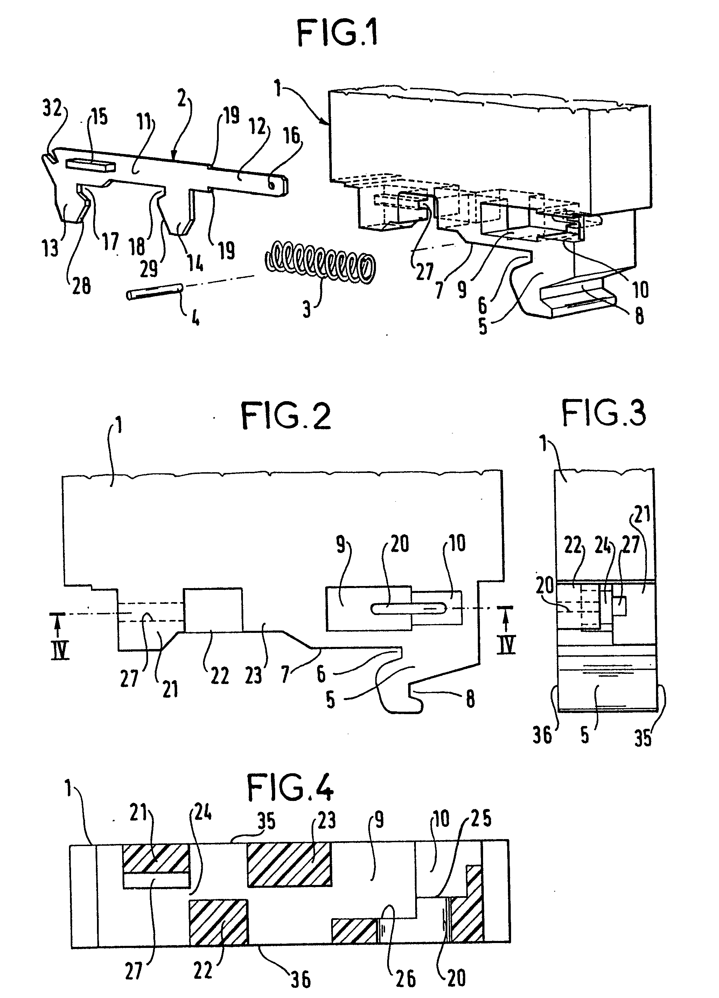

Le dispositif de fixation, représenté figures 1 à 6, est constitué par une base 1 d'un boîtier d'un appareil à fixer, une pièce d'accrochage 2, un ressort à compression 3 et une goupille 4.

La base 1 comporte près d'un bord une patte 5 qui forme un coin 6 avec une face inférieure 7 de la base, ledit coin étant tourné vers le bord opposé de la base; la patte 5 comporte une encoche 8 tournée vers l'extérieur de la base. Un premier logement 9 ménagé dans l'épaisseur de la base du côté de la patte 5 reçoit le ressort à compression 3 qui est comprimé partiellement, la longueur du premier logement étant inférieure à la longueur du ressort à compression non comprimé et supérieure à celle du ressort à compression comprimé totalement. Le premier logement 9 est prolongé, du côté de la patte 5 par un second logement 10 dont le rôle sera précisé plus loin; ce second logement est également ménagé dans l'épaisseur de la base et sa hauteur est inférieure à celle du premier logement.

La pièce d'accrochage 2 comporte un corps 11 qui se prolonge d'un côté par une tige 12, un premier crochet 13 situé à une extrémité du corps opposée à la tige, un dexième crochet 14 situé entre le premier crochet et la tige, et un guide 15 sur une face du corps et sur une partie de la longueur du corps, à l'opposé de la tige 12. La tige 12 comporte un trou 16 dans lequel la goupille 4 est engagée lorsque le dispositif de fixation est monté. Le premier crochet 13 comporte une encoche 17 et une arête 28 tournées vers la tige 12, et le deuxième crochet 14 comporte une encoche 18 et une arête 29 tournées vers le premier crochet 13.

La tige a une hauteur inférieure à celle du corps 11 dont l'extrémité prolongée par la tige forme un épaulement 19 de chaque côté de la tige. La hauteur du corps 11 est au moins égale au diamètre du ressort à compression 3 et égale à celle du premier logement 9. La distance entre les épaulements 19 et le trou 16 est au moins égale à la longueur du premier logement 9 de la base; une lumière 20 est ménagée au fond des logements 9 et 10 pour le passage de la goupille 4.

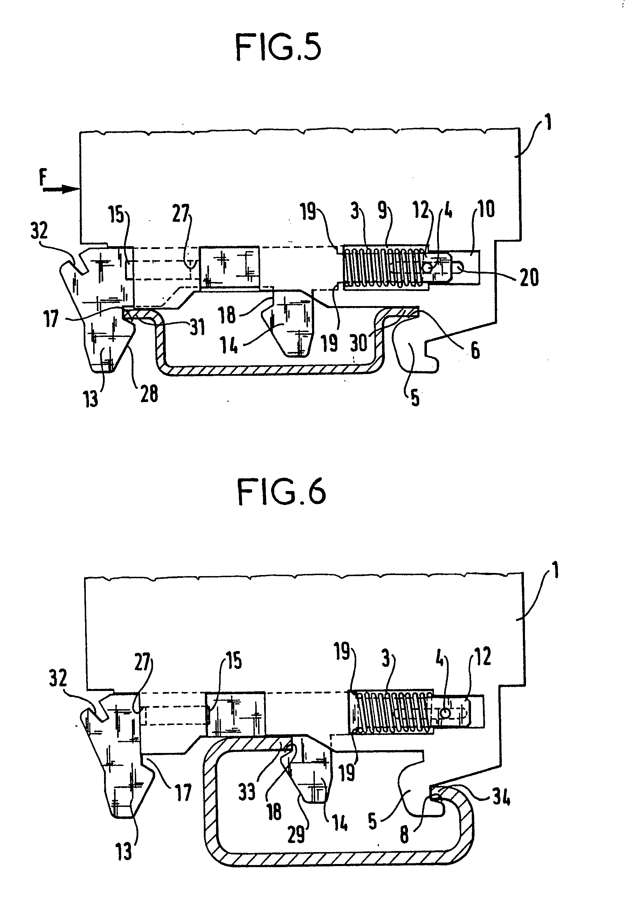

La figure 4 qui est une vue de dessous de la base selon une coupe IV-IV de la figure 2, représente l'extrémité de la base dans laquelle des évidements ont été faits de manière à ne laisser que les blocs 21, 22 et 23; le bloc 22 détermine avec les blocs 21 et 23, un guide longitudinal 24 dans lequel la pièce d'accrochage coulisse. Le guide longitudinal est donc situé dans l'épaisseur de la base entre deux faces 35 et 36 de celle-ci. Les évidements à l'extrémité de la base ont été faits dans le seul but de faciliter le démoulage du boîtier, dont la base 1 fait partie, lors de sa fabrication. Une paroi du fond 25 du second logement 10 est situé dans l'alignement du bloc 22 de sorte qu'une face de la tige 12 de la pièce d'accrochage 2 vient contre cette paroi 25 qui constitue ainsi une extrémité du guide longitudinal 24. La lumière 20 pratiquée au fond des premier et second logements donc dans la paroi 25 et une paroi 26 du fond du premier logement permet le passage de la goupille 4 et son déplacement longitudinal lorsque la pièce d'accrochage 2 coulisse. Le bloc 21 comporte une rainure 27 dans laquelle coulisse le guide 15 de la pièce d'accrochage 2; cette rainure 27 coopère donc avec le guide 15 pour empêcher tout autre mouvement que le coulissement de la pièce d'accrochage 2.

De cette manière la pièce d'accrochage 2, une fois montée dans la base, est maintenue dans le guide 24 son seul déplacement possible étant un déplacement longitudinal par coulissement dans la base; ce déplacement est limité par la goupille 4 dans le sens de l'extraction de la pièce d'accrochage qui est ainsi imperdable.

Le montage du dispositif de fixation s'effectue de la manière suivante, le dispositif de fixation monté étant représenté figures 5 et 6.

Le ressort à compression 3 est introduit dans le premier logement 9 dans lequel il est partiellement comprimé; la tige 12 est introduite dans le guide longitudinal 24 du côté du bloc 21; par coulissement de la pièce d'accrochage 2 la tige 12 traverse le ressort à compression 3 et le guide 15 vient dans la rainure 27. En pressant sur le premier crochet 13, les épaulements 19 de la pièce d'accrochage 2 viennent au contact du ressort à compression 3 qui est ainsi comprimé; le trou 16 de la tige 12 est donc éloigné du ressort à compression 3 ce qui permet d'y introduire la goupille 4. En relâchant la pression sur le premier crochet 13, le ressort à compression 3 repousse la pièce d'accrochage jusqu'à ce que les épaulements 19 sortent du premier logement 9; la goupille 4 est alors pratiquement au contact du ressort à compression 3.

La figure 5 représente le dispositif de fixation de l'invention monté sur un profilé symétrique dit profilé chapeau. Le montage s'effectue de la manière suivante. Une aile 30 du profilé étant engagée dans le coin 6 de la patte 5, une extrémité de l'autre aile 31 du profilé vient au contact de l'arête 28 du premier crochet 13; en exerçant sur la base 1 une pression dirigée vers le profilé, l'arête 28 glisse sur l'extrémité de l'aile 31, et la pièce d'accrochage 2 se déplace vers la gauche de la figure 5 entraînant la compression du ressort à compression 3 par la goupille 4. Lorsque l'extrémité de l'aile 31 est engagée dans l'encoche 17 la pièce d'accrochage est rappelée vers la droite par l'action du ressort à compression 3 sur la goupille 4. Comme représenté sur la figure 5, l'extrémité de l'aile 31 étant en butée au fond de l'encoche 17, la pièce d'accrochage 2 ne reprend pas sa position de repos, le ressort à compression 3 étant encore comprimé et n'occupant pas toute la longueur du premier logement 9. De cette manière le ressort à compression 3 exerce, par l'intermédiaire de la goupille 4, une force de rappel sur la pièce d'accrochage 2, force qui applique le premier crochet 13 sur l'aile 31 du profilé. Pour dégager la base 1 du profilé on engage un outil, tel qu'un tournevis par exemple, dans une encoche 32 du premier crochet 13 afin de déplacer la pièce d'accrochage 2 vers la gauche et libérer ainsi l'aile 31 du profilé par pivotement de la base par rapport à l'aile 30.

On peut également presser sur la base 1 selon la flèche F de manière à comprimer le ressort à compression 3 puisque la goupille 4 est fixe par rapport au premier crochet 13; on dégage ainsi l'aile 30 du profilé du coin 6 par pivotement de la base par rapport à l'aile 31.

La figure 6 représente un dispositif de fixation de l'invention monté sur un profilé asymétrique. Une aile 34 du profilé est engagée dans l'encoche 8 de la patte 5; l'extrémité de l'autre aile 33 du profilé vient en contact avec l'arête 29 du deuxième crochet 14; en exerçant sur la base 1 une pression dirigée vers le profilé, l'arête 29 glisse sur l'extrémité de l'aile 33 et la pièce d'accrochage 2 se déplace vers la droite de la figure 6, entraînant la compression du ressort à compression 3 par l'intermédiaire des épaulements 19. Lorsque l'extrémité de l'aile 33 est engagée dans l'encoche 18, la pièce d'accrochage 2 est rappelée vers la gauche par l'action du ressort à compression 3 sur les épaulements 19. Comme représenté figure 6, l'extrémité de l'aile 33 étant en butée au fond de l'encoche 18, la pièce d'accrochage 2 ne reprend pas sa position de repos, le ressort à compression étant encore comprimé et n'occupant pas toute la longueur du premier logement 9. De cette manière le ressort à compression 3 exerce sur la pièce d'accrochage 2 et par l'intermédiaire des épaulements 19, une force dirigée vers la gauche, force qui applique le deuxième crochet 14 sur l'extrémité de l'aile 33 du profilé.

Pour dégager la base 1 du profilé, il suffit de presser sur le premier crochet 13 ce qui entraîne le déplacement vers la droite de la pièce d'accrochage 2 donc du deuxième crochet 14, et libère ainsi l'aile 33 du profilé.

On remarquera que dans le dispositif de fixation de l'invention le ressort à compression 3 qui est monté comprimé en partie dans le premier logement 9 travaille de la même manière pour les deux types de profilés, c'est-à-dire qu'il subit une compression lorsque la base est montée sur le profilé; dans les deux cas le crochet coopérant avec le profilé est soumis à une force dirigée vers l'aile du profilé en contact avec le crochet.

La pièce d'accrochage 2 qui coulisse dans le guide longitudinal 24 ménagé dans l'épaisseur de la base 1 peut être en même matériau que ladite base, ou, si pour des raisons mécaniques par exemple, le guide longitudinal a une largeur faible, en métal.

Les logements 9 et 10 peuvent également traverser de part en part la base 1 sans que l'on sorte pour autant du cadre de l'invention.

Dans le dispositif de l'invention, dont un exemple de réalisation vient d'être décrit, la patte 5 et les crochets 13, 14 sont rigides, la fixation du boîtier sur un profilé ne nécessitant aucune élasticité des crochets ou de la patte, de sorte que même s'ils sont réalisés en matériau relativement souple, ils soient dimensionnés pour ne pas être élastiques.

Le fait que les crochets et la patte ne soient pas élastiques permet de réaliser les boîtiers des appareils à l'aide de matériaux thermodurcissables.

**Revendications**

1. Dispositif de fixation d'un appareil sur profilés supports de type symétrique ou asymétrique, ledit appareil ayant une base (1) comportant une patte rigide (5) et une pièce (2) coulissant dans un guide longitudinal (24) de la base, ladite pièce comportant un corps (11), une tige (12) prolongeant le corps, un premier (13) et un deuxième (14) crochets solidaires dudit corps, caractérisé par le fait que la patte rigide (5) est située à proximité d'un bord de la base (1), que ladite pièce est une pièce d'accrochage dont la tige (12) a une hauteur inférieure à celle du corps (11), la tige et le corps déterminant des épaulements (19), que la base (1) comporte du côté de la patte rigide (5) un premier (9) et un second (10) logements faisant suite au guide longitudinal (24), qu'un ressort à compression (3) est monté dans le premier logement (9), celui-ci ayant une hauteur égale à celle du corps (11) et une longueur telle que le ressort à compression (3) y est monté partiellement comprimé, que le second logement (10) fait suite au premier logement (9) et a une hauteur égale à celle de la tige (12), et que la tige est munie d'une goupille (4) au delà du ressort à compression (3) qui est ainsi comprimé dans le premier logement (9) dans chaque cas de montage sur un profilé.

2. Dispositif de fixation selon la revendication 1, caractérisé par le fait que les épaulements (19) et la goupille (4) sont séparés par une distance pratiquement égale à la longueur du premier logement (9).

3. Dispositif de fixation selon la revendication 1, caractérisé par le fait que le corps (11) comporte sur au moins une face, un guide (15) qui coulisse dans une rainure (27) ménagée dans la base (1) afin de rendre la pièce d'accrochage (2) imperdable.

**Patentansprüche**

1. Vorrichtung zur Befestigung eines Apparats auf Trageschienen vom symmetrischen oder asymmetrischen Typ, wobei der Apparat eine Basis (1) mit einem starren Fuß (5) und ein Stück (2) aufweist, das in einer Längsführung (24) der Basis gleitet, wobei das Stück einen Körper (11), einen den Körper verlängernden Stab (12), einen ersten (13) und einen zweiten fest mit dem Körper verbundenen Haken (14) aufweist, dadurch gekennzeichnet, daß der starre Fuß (5) sich in der Nähe eines Rands der Basis (1) befindet, daß das Stück ein Hakenstück ist, bei dem die Höhe des Stabs (12) geringer ist als die des Körpers (11), wobei der Stab und der Körper Schultern (19) bilden, daß die Basis (1) auf der Seite des starren Fußes (5) eine erste (9) und eine zweite Aushöhlung (10) aufweist, die auf die Längsführung (24) folgen, daß eine Kompressionsfeder (3) in der ersten Aushöhlung (9) angeordnet ist, wobei diese eine Höhe aufweist, die gleich der des Körpers (11) ist, und eine solche Länge, daß die Kompressionsfeder (3) teilweise komprimiert in ihr angeordnet ist, daß die zweite Aushöhlung (10) auf die erste folgt und eine Höhe gleich der des Stabes (12) hat, und daß der Stab mit einem Stift (4) jenseits der Kompressionsfeder (3) versehen ist, die so in jedem Fall einer Montage auf einer Schiene in der ersten Aushöhlung (9) komprimiert ist.

2. Befestigungsvorrichtung nach Anspruch 1, dadurch gekennzeichnet, daß die Schultern (19) und der Stift (4) durch einen Abstand voneinander getrennt sind, der praktisch gleich der Länge der ersten Aushöhlung (9) ist.

3. Befestigungsvorrichtung nach Anspruch 1, dadurch gekennzeichnet, daß der Körper (11) auf mindestens einer Seite eine Führung (15) aufweist, die in einer Nut (27) der Basis (1) gleitet, um das Hakenstück (2) unverlierbar zu machen.

**Claims**

1. A device for fixing an apparatus on support profiles of the symmetrical or the assymetrical type, said apparatus having a base (1) comprising a rigid leg (5) and a piece (2) sliding in a longitudinal guide (24) of the base, said piece comprising a body (11), a rod (12) extending the body, a first (13) and a second hook (14) integral with said body, characterized in that the rigid leg (5) is located close to one border of the base (1), that said piece is a hooking piece the rod (12) of which has a smaller height than the body (11), the rod and the body defining shoulders (19), that the base (1) comprises on the side of the rigid leg (5) a first (9) and a second recess (10) following the longitudinal guide (24), that a compression spring (3) is installed in the first recess (9), the latter having the same height as the body (1) and such a length that the compression spring (3) is installed partially compressed therein, that the second recess (10) follows the first recess (9) and has the same height as the rod (12), and that the rod is provided with a pin (4) beyond the compression spring (3) which is thus compressed in the first recess (9) in each case of installation of the apparatus on a profile.

2. A fixing device according to claim 1, characterized in that the shoulders (19) and the pin (4) are separated by a distance which is practically equal to the length of the first recess (9).

3. A fixing device according to claim 1, characterized in that the body (11) comprises on at least one face a guide (15) which slides in a groove (27) provided in the base (1) so as to make the hooking piece (2) captive.

# FIG.1

# FIG.2

# FIG.3

# FIG.4

# FIG.5

# FIG.6